Europäisches Patentamt

**European Patent Office**

Office européen des brevets

(11) Numéro de publication: **0 040 145 B1**

(12) **FASCICULE DE BREVET EUROPEEN**

(45) Date de publication du fascicule du brevet:
29.08.84

(21) Numéro de dépôt: **81400729.0**

(22) Date de dépôt: **08.05.81**

(51) Int. Cl.³: **C 03 B 37/16,** B 26 D 7/18,
B 26 D 7/26, D 01 G 1/04

(54) Dispositif pour la coupe de fils continus, notamment de fils de verre.

(30) Priorité: **09.05.80 FR 8010376**

(43) Date de publication de la demande:
**18.11.81 Bulletin 81/46**

(45) Mention de la délivrance du brevet:
**29.08.84 Bulletin 84/35**

(84) Etats contractants désignés:
**BE DE FR GB IT NL SE**

(56) Documents cités:
**FR - A - 1 261 537**
**FR - A - 2 176 580**
**FR - A - 2 350 932**
**GB - A - 1 081 710**
**US - A - 3 353 431**

(73) Titulaire: **VETROTEX SAINT-GOBAIN, 767 quai des Allobroges, F-73000 Chambéry (FR)**

(72) Inventeur: **Roncato, Giordano, 168 avenue du Grand-Port, F-73100 Aix-les-Bains (FR)**
Inventeur: **Berlioz, Jean, 905 avenue des Bois, F-73000 Chambéry (FR)**
Inventeur: **Roy, Louis, 280 allée des Cimes, F-73000 Chambéry (FR)**

(74) Mandataire: **Eudes, Marcel et al, Saint-Gobain Recherche 39 Quai Lucien Lefranc, F-93304 Aubervilliers Cedex (FR)**

BUNDESDRUCKEREI BERLIN

# Description

L'invention concerne un dispositif pour couper en tronçons des fils de matière organique ou minérale, notamment des fils de verre se présentant sous forme de fils séparés ou sous forme de mèche.

Plus particulièrement, la présente invention concerne une machine de coupe, comprenant un organe d'appui et un tambour portelames, destinée à tronçonner des fils en éléments de longueur régulière.

On savait jusqu'à maintenant sectionner une matière filamenteuse en tronçons de longueur constante, en faisant passer cette matière entre un tambour d'appui et un tambour porteur de lames disposées perpendiculairement à sa périphérie, le tranchant desdites lames demeurant en saillie.

Toutefois, les mèches ou les fils de verre présentent une cohésion assez faible et, par suite, les filaments qui les constituent se séparent facilement les uns des autres lors de l'opération de coupe. En effet, le fil, concé entre le tranchant des lames et la surface de l'organe d'appui, subit une action d'arc-boutement qui provoque son défibrage. Un certain nombre de filaments coupés forment alores rapidement une quantité importante de bourre, qui remplit les espaces séparant les lames et tend à provoquer une coupe irrégulière.

Des solutions ont été proposés pour remédier à cet inconvénient, et dans ce domaine, l'art antérieur et bien illustré par le brevet américain US 3 555 947 et le brevet français FR 1 261 537.

Le premier de ces documents décrit un tambour porte-lames coopérant avec la surface d'un tambour d'appui et équipé d'une part de lames en saillie disposées régulièrement à sa périphérie, d'autre part de lamelles d'éjection placées entre les lames. Ces lamelles, susceptibles de se déplacer readialement vers l'extérieur tout en restant prisonnières de butées placées à leurs deux extrémités, éjectent les tronçons de fils aussitôt après la coupe, sous l'effet de la force centrifuge, et empêchent ainsi la formation de bourre. Ce dispositif donne satisfaction tant que la vitesse d'entrainement du fil ne dépasse pas quelques mètres par seconde; pour des vitesses plus élevées, la force centrifuge devient telle qu'elle provoque inévitablement la rupture desdites lamelles d'éjection.

Le second brevet décrit un autre dispositif également constitué d'un tambour porte-lames. Ce dernier est équipé de lames disposées radialement et noyées dans un revêtement en élastomère qui recouvre toute la surface dudit tambour. La surface du tambour d'appui est revêtue d'un élastomère sensiblement plus dur que l'élastomère recouvrant la surface du tambour porte-lames. Le fil est d'abord entrainé par pincement entre lesdites surfaces en élastomère, puis amené dans la zone de coupe proprement dite. L'écartement entre le tambour d'appui et le tambour porte-lames est réglé de manière que l'élastomère du tambour d'appui comprime et déforme radialement vers l'intérieur la couche d'élastomère recouvrant la surface du tambour porte-lames.

Cette déformation a pour effet de faire apparaître le tranchant des lames, qui coupent alors le fil. A la sortie de la zone de coupe, l'élastomère recouvrant la surface du tambour porte-lames reprend sa forme initiale et éjecte les tronçons de fil.

Là encore, la vitesse de coupe est nécessairement réduite car, dès que l'on dépasse quelques mètres par seconde, la déformation trop rapide et trop brutale de l'élastomère situé à la surface du tambour porte-lames provoque un échauffement tel qu'il s'ensuit une dégradation rapide dudit élastomère.

Les dispositifs précédemment décrits ne permettent donc que la coupe a posteriori d'une matière filamenteuse se présentant sous forme d'enroulements de fils ou de mèches fabriqués selon des procédés classiques, processus coûteux parce qu'il implique l'enroulement, puis le déroulement du fil, ce qui entraine de gros frais de manutention et des pertes excessives de fil à la suite des différentes manipulations.

Il est donc particulièrement avantageux de procéder en une seule opération à l'élaboration de fils par étirage à partie de plusieurs filières et à leur coupe.

Ce procédé, appelé couramment »coupe directe sous filière« est mis en œuvre par un dispositif qui peut assumer les fonctions d'étirage et de coupe.

Dans ce domaine, l'art antérieur est bien décrit par la publication du brevet français FR 2 253 718.

D'après ce brevet, le fil est étiré par pincement entre deux roues dont les surfaces ont une zone de contact, la première, ou rouleau de pression, présentant une surface moletée et la seconde, ou tambour d'appui, une surface lisse flexible. A la sortie de cette zone de pincement, le fil est entrainé par le tambour d'appui vers une zone de coupe formée par le contact entre ledit tambour et une troisième roue, ou tambour porte-lames, munie d'une série de lames en saillie, montées dans des rainures ménagées dans sa surface.

Ce type de dispositif présente divers inconvénients. Tout d'abord, la compression subie par le fil entre le rouleau de pression et le tambour d'appui a pour effet de diminuer sa cohésion, donc celle des fibres coupées; il en résulte que chaque fibre coupée comprend un certain nombre de filaments s'écartant plus ou moins de sa surface. Les fibres coupées présentant ce défaut s'accrochent facilement et ne se prêtent pas à une manutention facile. Par ailleurs, le manque de cohésion des fibres les rend impropres à certaines applications.

Cette compression du fil provoque un dépôt d'ensimage à la surface du rouleau de pression, qui devient lisse; le fil a alors tendance à s'enrouler autour de ce rouleau ce qui interrompt la marche du dispositif.

Lorsque la vitesse de rotation du tambour d'appui et du tambour porte-lames est élevée, un autre inconvénient apparaît, qui résulte du choc des lames contre le tambour d'appui. Cet inconvénient est d'autant moins facile à éliminer que les lames sont plus saillantes. Ce choc occasionne des vibrations dont les conséquences sont d'une part une usure très rapide des lames et du revêtement du tambour d'appui, d'autre part un fonctionnement très bruyant qui constitue une nuisance importante.

La présente invention a pour objet un dispositif de coupe qui, susceptible d'assurer une fonction d'étirage et alimenté par des fils provenant d'une ou plusieurs filières, permet d'obtenir des tronçons de longueur prédéterminée, d'éjecter de façon sûre et complète lesdits tronçons, de s'opposer à la formation de bourre entre les lames, d'allonger la durée de vie des organes mécaniques du dispositif et de réduire sensiblement le niveau sonore.

Un dispositif selon l'invention comprend un organe d'appui constitué d'un tambour rotatif, un tambour tournant autour d'un axe parallèle au précédent et qui porte à sa périphérie une pluralité de lames de coupe fixes, séparées par une série d'éléments assurant la compression du fil dans la zone de coupe, et susceptibles de se déplacer entre et sous lesdites lames.

Conformément à l'invention, les lames de coupe sont solidaires du tambour porte-lame par leurs seules extrémités, leur base, opposée à leur tranchant demeurant entièrement libre de tout contact, tandis que les éléments mobiles disposés entre les lames de coupe sont constitués par les ailettes solidaires d'un anneau déformable, disposé sous la base desdites lames, son axe coïncidant avec l'axe de rotation du tambour porte-lames, et susceptible de se déplacer radialement dans un espace ménagé entre ladite base et le tambour porte-lames.

Suivant une autre caractéristique de l'invention l'anneau et les ailettes forment une couronne à ailettes monolithique.

D'autres avantages de l'invention ressortiront de la description qui suit et qui est relative à une forme du dispositif suivant l'invention, donnée à titre d'exemple.

Cette description se réfère aux dessins joints qui montrent:

—fig. 1A et 1B une vue schématique de l'implantation générale du dispositif et de l'équipement qui lui est associé pour étirer des filaments continus de verre à partir d'une multiplicité de sources et les amener jusqu'à lui,

— fig. 2 deux demi-coupes axiales d'une partie du tambour porte-lames,

—fig. 3 une vue schématique en perspective des différentes pièces constituant le tambour porte-lames,

—fig. 4A et 4B des coupes partielles schématiques de deux variantes de l'organe d'appui et du tambour porte-lames, selon un plan perpendiculaire aux axes de rotation desdits organes.

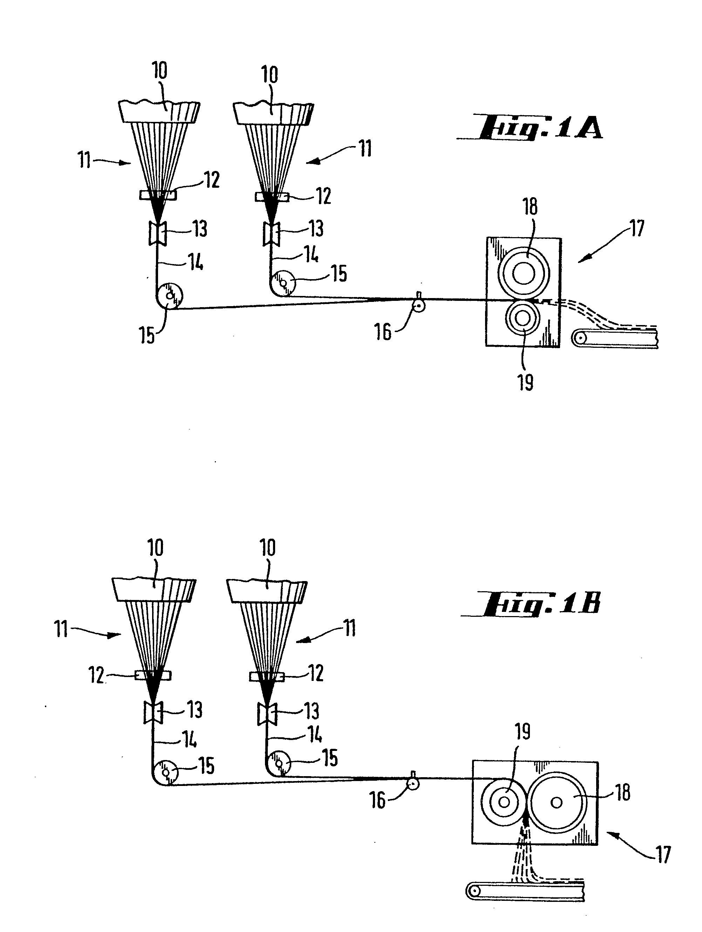

La chaîne de fabrication, schématisée par les fig. 1A et 1B, comprend en amont au moins une filière 10 alimentée à partir de verre fondu ou de billes de verre par un dispositif d'alimentation non représenté.

La ou les filières 10, généralement en platine rhodié et chauffées par effet Joule, sont munies à leur partie inférieure d'une pluralité d'orifices à partir desquels une pluralité de filaments 11 sont étirés mécaniquement. Ces filaments, formant au moins une nappe, sont revêtus d'un produit d'encollage lubrifiant, appelé couramment ensimage, par passage sur un dispositif d'enduction 12, avant d'être réunis sous forme de fils par des roulettes d'assemblage 13. Les fils 14 ainsi formés sont amenés au moyen de poulies de renvoi 15 à un dispositif de guidage 16, par exemple un peigne, avant d'être introduits dans la machine de coupe 17 composée d'un tambour d'appui 18 et d'un tambour porte-lames 19.

D'après les figures 1A et 1B l'étirage est obtenu par la seule action du dispositif de coupe dont le fonctionnement sera décrit plus loin; il pourrait aussi être effectué par un dipsositif d'étirage auxiliaire, placé en amont du dispositif de coupe, tel que ceux décrits dans le brevet US 3 873 290.

Le dispositif de coupe selon l'invention peut être disposé de différentes façons: sa disposition dépendra des moyens mis en œuvre en amont pour guider et étirer les fils, ainsi que de l'implantation du dispositif de réception des fils coupés.

Les fig. 1A et 1B représentent ainsi respectivement, à titre d'exemples, deux dispositions classiques permettant soit de projeter latéralement les fils coupés (coupe horizontale), soit de les projeter verticalement.

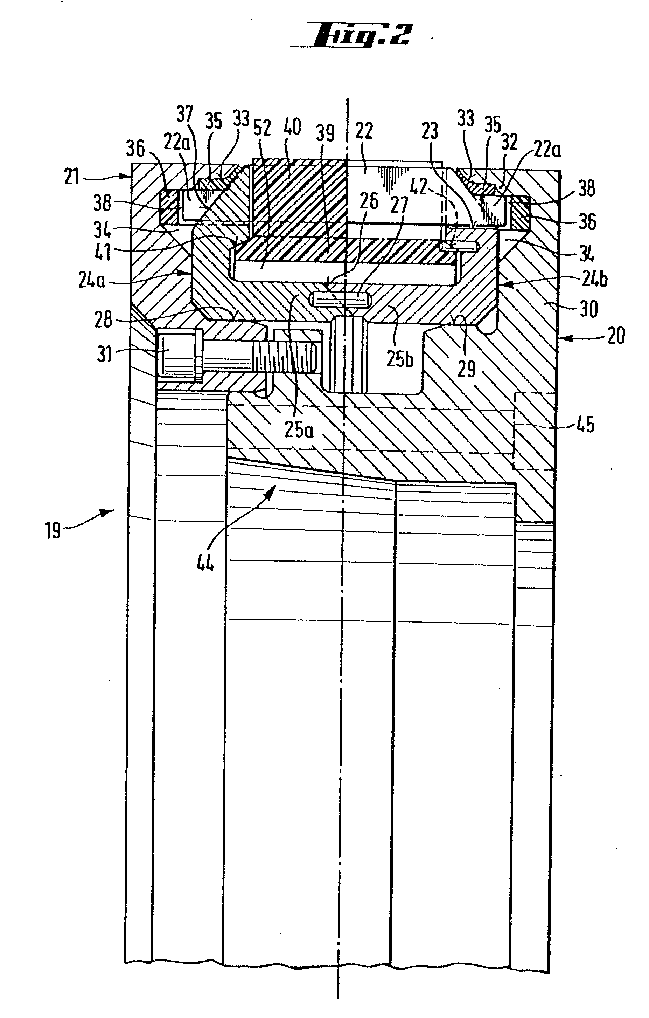

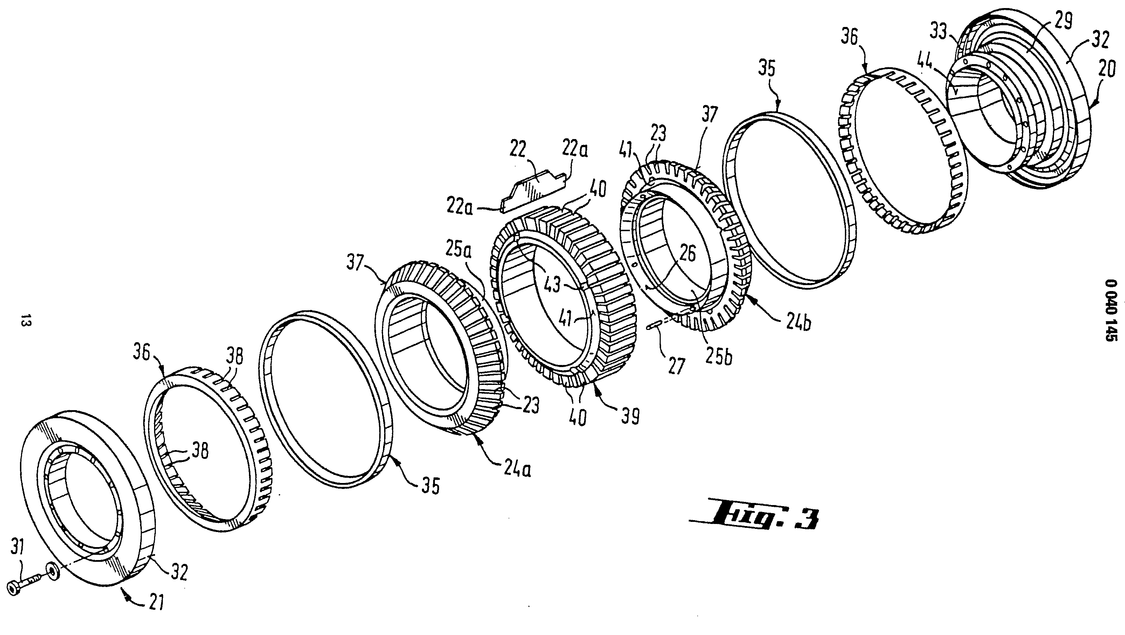

La structure du tambour porte-lames 19 et celle du tambour d'appui 18 sont représentées par les fig. 2 et 3.

Le tambour porte-lames comprend un moyeu 20 et une bride de serrage 21 renfermant les différents éléments de fixation des lames de coupe 22.

Les lames de coupe 22, qui possèdent à chaque extrémité un talon 22a, viennent s'insérer par ce talon dans les fentes radiales 23 des flasques 24a et 24b de deux jantes 25a et 25b assemblées l'une sur l'autre par le moyen du pan conique 26 et positionnées face à face angulairement par une cheville 27. La hauteur des fentes radiales 23 est inférieure à la hauteur des flasques 24a et 24b ce qui permet de réserver un espace vide entre la base des lames 22 qui y sont insérées et la face supérieure des jantes 25a et 25b. Les jantes 25a et 25b sont montées concentriquement à l'axe de rotation du tambour 19 par les portées 28 et 29 et sont serrées l'une contre l'autre entre le flasque 30 du moyeu 20 et la bride 21 rendus solidaires par les vis 31.

Le moyeu 20 et la bride 21 possèdent chacun un rebord 32 muni d'un lamage 33 pratiqué sur sa face interne ainsi que d'une gorge 34. Des bagues souples 35 sont disposées dans ces lamages 33 et viennent s'insérer entre leur paroi et le chant supérieur des talons 22a des lames de coupe.

De plus, une paire de joues souples 36, de forme annulaire et rainurées ainsi que le représente la figure 3, sont disposées au fond des gorges 34 et leurs nervures pénètrent dans les espaces libres situés entre les talons 22a des lames.

Lors du serrage du moyeu 20 et de la bride 21 par l'intermédiaire des vis 31, les bagues 35 sont comprimées et maintiennent de ce fait les lames 22 au fond des fentes radiales 23 pratiquées dans les flasques 24a et 24b.

Sous l'effet dudit serrage, les joues 36 sont comprimées entre le fond des gorges 34 et les faces obliques 37 des flasques 24a et 24b. La profondeur de leurs rainures est telle qu'un espace libre 38 subsiste généralement entre l'extrémité des talons 22a et le fond desdites rainures. Cette disposition permet de maintenir fermement les lames en place tout en tolérant de légères différences de l'une à l'autre.

D'autre part, on dispose sous et entre les lames 22 des éléments souples référencés respectivement 39 et 40. L'élément 39, situé sous les lames, est constitué d'un anneau dont les bords chanfreinés épousent exactement les portées coniques 41 des flasques 24a et 24b ainsi que le représente la fig. 2.

Les éléments 40 sont solidaires de l'anneau 39 et font saillie sur sa surface supérieure sous forme d'ailettes disposées au pas des lames 22 et venant se loger, avec un certain jeu, dans les espaces libres compris entre lesdites lames. Ces éléments 39 et 40 forment ainsi une couronne à ailettes déformable, qui est de préférence monolithique; cette couronne, montée libre sans serrage, est positionnée angulairement par des ergots 42 qui pénètrent dans des encoches 43 et elle est maintenue centrée non rigidement par l'intermédiaire des chanfreins coopérant avec les portées coniques 41 des flasques 24a et 24b.

Du mode d'assemblage précédemment décrit, il résulte que les lames 22 ne sont maintenues qu'à leurs extrémités, par l'intermédiaire de contacts souples, contre les contacts rigides constitués par le fond des fentes radiales des flasques 24a et 24b.

Le tambour porte-lames ainsi assemblé est monté sur un arbre tournant non représenté, et se centre sur celui-ci par l'intermédiaire du cône 44; la fixation du tambour porte-lames sur l'arbre est assurée par les vis 45. L'axe de rotation de la couronne à ailettes coïncide alors avec le sien.

Les éléments annulaires 35 et 36, l'anneau 39 et ses ailettes 40 sont en élastomère, par exemple en polyuréthane dont la dureté Shore, échelle A, est comprise entre 80 et 100.

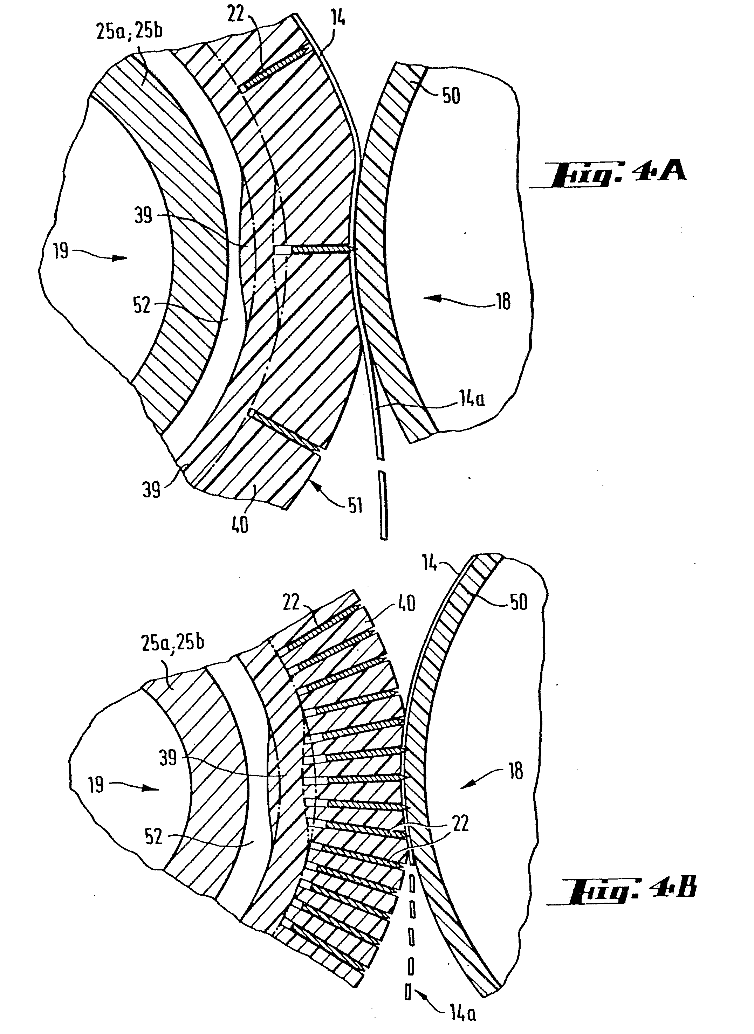

Le fonctionnement du dispositif de coupe selon l'invention est clairement illustré par les fig. 4A et 4B.

Ainsi qu'il ressortait des fig. 1A et 1B, le tambour porte-lames 19 coopère avec un tambour d'appui rotatif 18. La surface de ce dernier est recouverte d'une couche souple 50 en élastomère, par exemple en polyuréthane identique à celui constituant la couronne à ailettes précédemment décrite. La distance séparant les axes de rotation des tambours 18 et 19 est réglée de manière que le tranchant des lames pénètre peu profondément dans le revêtement 50 du tambour d'appui.

On notera que le diamètre de la couronne à ailettes est tel que, lorsque le dispositif de coupe est à l'arrêt, les faces supérieures des ailettes ne dépassent pas le niveau du tranchant des lames. Le mouvement moteur est donné de préférence au tambour porte-lames 19, qui met en mouvement le tambour d'appui 18, monté fou sur son axe. Le mouvement est transmis simultanément par l'action des ailettes 40 sur le revêtement 50 et par l'engrènement résultant de la légère pénétration des lames 22 dans ledit revêtement.

La fig. 4A représente le fonctionnement d'une des variantes du dispositif selon l'invention adaptée, à la fabrication de brins coupés relativement longs.

D'après celle-ci, le tambour 19 comprend une couronne à ailettes dont les faces supérieures arrivent au niveau du tranchant des lames lorsque le tambour est à l'arrêt. Lorsque le tambour 19 atteint sa vitesse de rotation normale, l'anneau 39 et les ailettes 40 ont subi une légère expansion radiale provoquée par la force centrifuge et, sous cet effet, la succession des faces supérieures des ailettes forme alors une surface de révolution cylindrique quasi continue 51, dont le rayon est plus grand que celui du cercle concentrique passant par le sommet du tranchant des lames 22.

Le tambour 19 comprend également des lames dont l'écartement est tel que le travail de coupe est effectué par une seule lame à la fois.

Selon l'implantation du dispositif de coupe, le ou les fils peuvent arriver dans la zone de coupe directement (fig. 1A) ou après avoir parcouru un arc d'enroulement sur la surface du tambour porte-lames 19 (fig. 18). Il est bien évident que le fil peut s'enrouler au préalable sur le tambour 18, si l'on inverse les positions des tambours 18 et 19 tels que représentés à la figure 18.

Dans le premier cas, la surface 51 et celle du revêtement 50 viennent en contact, pincent le ou les fils et provoquent leur étirage, préalablement à leur coupe, par cette seule action. Dans le second cas, illustré aussi par la figure 4A, le fil 14 est entraîné par les effets conjoints de son pincement et de la traction supplémentaire résultant de son adhérence sur la surface 51 (ou celle du revêtement 50).

Dans la zone de coupe proprement dite, les ailettes 40 sont repoussées vers l'intérieur sous l'action de la pression exercée par la surface du tambour d'appui; sous cette action, l'anneau 39 de la couronne à ailettes se déforme radialement vers l'intérieur et s'écarte des portées coniques 41 dans l'espace situé au-dessus des jantes 25a et 25b.

Ceci a pour conséquence de dégager progressivement le tranchant d'une lame 22 qui, pénétrant dans le revêtement 50, coupe alors le fil 14 et donne naissance au brin 14a.

A la sortie de la zone de coupe, ce dernier est éjecté par les ailettes 40 qui ressortent progressivement sous l'action de la force centrifuge.

Dans cette variante, l'entrainement en rotation du tambour 18 par le tambour moteur 19 est assuré essentiellement par la coopération étroite de la surface 51 avec celle du revêtement 50; il en résulte une compression du brin coupé 14a qui est atténuée par le retrait radial de la couronne à ailettes et n'est pas suffisamment importante pour nuire à son intégrité.

La fig. 4B représente la fonctionnement d'une autre variante du dispositif selon l'invention, adaptée à la coupe d'un fil en tronçons de faible longueur, pour lequel l'écartement des lames est tel que le travail de coupe est effectué simultanément par au moins deux lames.

L'intégrité des brins coupés est d'autant plus difficile à maintenir que les points de contact entre les différents filaments élémentaires formant le brin sont moins nombreux ce qui est notamment le cas lorsqu'on réduit la longueur des brins. La perte de cohésion peut intervenir soit à la suite de l'écrasement du brin entre deux surfaces fortement pressées l'une contre l'autre, soit à la suite du cisaillement intervenant lors de la coupe d'un brin insuffisamment maintenu pendant cette opération.

Il faut donc éviter soit un trop fort serrage entre la face supérieure des ailettes 40 et la surface du revêtement 50, soit au contraire une absence de contact entre ces deux surfaces cas extrémes dans lesquels un certain nombre de filaments élémentaires se séparent des brins coupés, entraînant la formation de bourre et l'encrassement rapide du dispositif.

Dans cette variante, la couronne à ailettes est donc choisie de manière que même après expansion radiale provoquée par la force centrifuge, les faces supérieures des ailettes 40 décrivent un cercle dont le rayon est légèrement inférieur à celui du cercle concentrique passant par le sommet du tranchant des lames 22.

Selon l'implantation du dispositif de coupe, le ou les fils peuvent arriver dans la zone de coupe directement ou après avoir parcouru un arc d'enroulement sur la surface du tambour d'appui 18. Un enroulement préalable sur la surface du tambour porte-lames 19 est à exclure dans la mesure où le tranchant des lames dépasse très légèrement la surface de révolution cylindrique décrite par la face supérieure des ailettes.

Dans le premir cas il est nécessaire d'utiliser un moyen d'étirage auxiliaire disposé en amont du dispositif de coupe; dans le second cas, illustré par la fig. 4B, le fil 14 peut éventuellement être entraîné par la seule traction résultant de son adhérence sur la surface du revêtement 50.

Dans la zone de coupe proprement dite, le fil 14 vient en contact avec le tranchant d'une première lame, puis se trouve emprisonné et maintenu entre la surface du revêtement 50, la face supérieure d'une ailette et la lame suivante qui amorce le tronçonnement du brin. Au contact du revêtement 50, les ailettes 40 sont repoussées dans l'espace libre 52 mais plus légèrement et sous une pression plus faible que dans le cas précédent. Le brin coupé est ainsi maintenu simplement serré entre les deux surfaces en élastomère et conserve toute son intégrité.

A la sortie de la zone de coupe les ailettes 40 ressortent en éjectant les brins coupés 14a.

Dans cette variante l'entrainement en rotation du tambour 18 par le tambour moteur 19 est assuré essentiellement par la pénétration des lames 22 dans le revêtement 50. Pour cette raison il peut être également intéressant d'utiliser un tambour porte-lames muni de lames disposées perpendiculairement à sa périphérie et inclinées par rapport à son axe de rotation selon un angle compris entre 10 et 30°.

De la description précédente il ressort que le dispositif de coupe est réglé de manière que les lames de coupe pénètrent peu profondément dans le revêtement du tambour d'appui, ce réglage étant corrigé chaque fois que la détérioration de la surface dudit revêtement nécessitera un réusinage.

En fonction de ce réglage, les caractéristiques de la couronne à ailettes, et principalement l'écart entre les rayons des cercles concentriques décrits par les faces supérieures des ailettes et le sommet du tranchant des lames, seront choisies notamment d'après la longueur désirée pour les brins coupés.

Cet écart est de l'ordre de quelques dixièmes de millimètres, par exemple de $-2/10$ à $+3/10$ de millimètres en prenant comme rayon de référence celui du cercle passant par le sommet des lames de coupe.

Outre la longueur des brins coupés, il est bien évident que d'autres paramètres, tels que par exemple le degré d'humidité du fil ou le diamètre des filaments constituant ledit fil devront être également pris en considération pour choisir la couronne à ailettes la mieux adaptée à la fabrication envisagée.

Le dispositif selon l'invention combine de nombreux avantages, dont notamment les suivants:

— La possibilité de réaliser la coupe de plusieurs fils de verre étirés à partir de plusieurs filières à des vitesses linéaires d'étirage de plusieurs dizaines de mètres par seconde.
— La couronne à ailettes permet de maintenir l'intégrité des tronçons de fil et de les éjecter hors de la zone de coupe.
— La couronne à ailettes permet de prévenir l'encrassement du tambour porte-lames.
— Le tambour porte-lames qui est moteur et conserve un diamètre constant, évite les changements de réglage de la vitesse de rotation.

— Le tambour porte-lames est facile à monter et à démonter, lorsqu'il devient nécessaire de changer une ou plusieurs lames.

— La structure du tambour porte-lames présente également l'avantage de pouvoir modifier la longueur des tronçons de fil d'une quantité multiple du pas des rainures.

En effet, pour une couronne à ailettes donnée, le réglage de la longueur peut être facilement obtenu en insérant entre deux lames de coupe successives une ou plusieurs lames dénuées de tranchant et dont la hauteur est telle qu'elles ne touchent pas la surface du tambour d'appui dans la zone de coupe. L'insertion de ces lames a pour objet de maintenir en place la couronne à ailettes et d'éviter des déformations importantes qui provoqueraient sa rupture.

A la limite, il est possible d'équiper le tambour porte-lames d'une seule lame de coupe et d'obtenir ainsi des tronçons dont la longueur est égale à la circonférence dudit tambour. D'une manière plus courante, on obtient sans difficulté, à partie de fils étirés à des vitesses comprises entre 30 et 50 mètres par seconde, des tronçons dont la longueur peut varier entre 3 millimètres et environ 50 millimètres.

**Revendications**

1. Dispositif de coupe destiné à couper des fils continus en tronçons d'une longueur prédéterminée, comprenant un organe d'appui constitué par un tambour rotatif (18) dont la surface est entièrement lisse, un second tambour (19) tournant autour d'un axe parallèle au précédent, équipé de lames (22) disposées perpendiculairement à sa périphérie et, entre les lames (22), d'organes assurant sous l'effet de la force centrifuge la compression du fil (14) contre la surface du tambour d'appui (18) et l'éjection des tronçons coupés (14a), caractérisé en ce que les lames (22) sont fixées par leurs seules extrémités (22a) et que leur base opposée à leur tranchant demeure entièrement libre de tout contact, les organes assurant la compression du fil (14) étant constitués par des ailettes (40) solidaires d'un anneau déformable (39) disposé sous la base des lames (22), son axe coïncidant avec l'axe de rotation du tambour porte-lames (19), et susceptible de se déplacer radialement dans un expace (52) ménagé entre sa base et le tambour porte-lames (19).

2. Dispositif selon la revendication 1, caractérisé en ce que l'anneau (39) et les ailettes (40) forment une couronne à ailettes monolithique.

3. Dispositif selon l'une des revendications précédentes, caractérisé en ce que l'anneau (39) et les ailettes (40) sont en élastomère dont la dureté Shore A est comprise entre 80 et 100.

4. Dispositif selon l'une des revendications précédentes, caractérisé en ce que les extrémités des lames (22) viennent s'insérer dans les fentes (23) pratiquées dans deux flasques (24a, 24b) supportés par deux jantes (25a, 25b) montées face à face, concentriquement à l'axe de rotation du tambour porte-lames (19).

5. Dispositif selon la revendication 4, caractérisé en ce que les extrémités des lames (22) sont maintenues au fond des fentes (23) pratiquées dans les flasques (24a, 24b) par une paire de bagues (35) en élastomère et une paire de joues (36), également en élastomère, munies de rainures dans lesquelles viennent s'insérer les talons (22a) des lames (22).

6. Dispositif selon l'une des revendications précédentes, caractérisé en ce que l'anneau (39) présente des bords chanfreinés coopérant avec des portées coniques (41) ménagées sur la face interne des flasques (24a, 24b).

7. Dispositif selon l'une des revendications précédentes, caractérisé en ce qu'en cours de fonctionnement la face supérieure des ailettes (40) décrit une surface cylindrique de révolution (51) dont le rayon est différent de celui du cercle passant par le sommet du tranchant des lames (22).

8. Dispositif selon la revendication 7, caractérisé en ce que l'écart entre les deux rayons est de quelques dixièmes de millimètres.

9. Dispositif selon l'une des revendications précédentes, caractérisé en ce que les lames de coupe (22) sont disposées dans des plans radiaux à la périphérie du tambour (19).

10. Dispositif selon l'une des revendications 1 à 8, caractérisé en ce que les lames (22) sont inclinées par rapport à l'axe de rotation du tambour porte-lames (19) selon un angle compris entre 10 et 30°.

11. Dispositif selon l'une des revendications 2 à 10, caractérisé en ce que la surface du tambour d'appui (18) est recouverte d'une couche élastomère (50) identique à l'élastomère constituant la couronne à ailettes.

12. Dispositif selon l'une des revendications précédentes, caractérisé en ce que pour une couronne à ailettes donnée, la longueur des brins de fils coupés (14a) est modifiée en insérant entre deux lames (22) successives au moins une lame dénuée de tranchant et dont la hauteur est telle qu'elle ne touche pas la surface du tambour d'appui (18) dans la zone de coupe.

**Patentansprüche**

1. Schneidvorrichtung zum Schneiden von endlosen Fasern in Stücke vorbestimmter Länge mit einem Druckteil, welches von einer mit einer vollkommen glatten Oberfläche versehenen drehbaren Trommel (18) gebildet ist, und mit einer zweiten Trommel (19), die sich um eine zur Achse der Trommel (18) parallelen Achse dreht und die Messer (22) aufweist, die senkrecht zur Peripherie der zweiten Trommel angeordnet sind, wobei die zweite Trommel (19) zwischen den Messern (22) Teile aufweist, die unter der Wirkung der Zentrifugalkraft das Drücken der Faser (14) gegen die Oberfläche der Drucktrommel (18) und den Auswurf der geschnittenen Faserstücke (14a) gewährleisten, dadurch gekennzeichnet, daß die Messer (22) nur an ihrem Endbereich (22a) gehalten sind, und daß die Grundfläche der Messer, die ihrer Schneidfläche gegenüberliegt, vollkommen berührungsfrei bleibt, wobei die Teile, die die Andrückung der Faser (14) gewährleisten, von Rippen (40) gebildet sind, die einstückig an einem deformierbaren Ring (39) angeformt sind, wobei der Ring (39) unterhalb der Grundfläche der Messer (22) angeordnet ist und wobei dessen Achse mit der Drehachse der Messerhalter-Trommel (19) zusammenfällt und wobei der Ring (39) in einem Raum (52) zwischen seiner Grundfläche und der Messerhalter-Trommel (19) radial bewegbar ist.

2. Schneidvorrichtung nach Anspruch 1, dadurch gekennzeichnet, daß der Ring (39) und die Rippen (40) einen Kranz mit monolithischen Rippen bilden.

3. Schneidvorrichtung nach einem der vorangehenden Ansprüche, dadurch gekennzeichnet, daß der Ring (39) und die Rippen (40) aus elastomerem Material gebildet sind, das eine Shore-A-Härte zwischen 80 und 100 aufweist.

4. Schneidvorrichtung nach einem der vorangehenden Ansprüche, dadurch gekennzeichnet, daß die Endbereiche der Messer (22) in Ausnehmungen (23) zu liegen kommen, welche in zwei Flanschen (24a, 24b) angeordnet sind, die von zwei Kränzen (25a, 25b) gehalten sind, die konzentrisch zur Drehachse der Messerhalter-Trommel (19) direkt einander gegenüberliegend angeordnet sind.

5. Schneidvorrichtung nach Anspruch 4, dadurch gekennzeichnet, daß die Endbereiche der Messer (22) auf dem Boden der Ausnehmungen (23), die in den Flanschen (24a, 24b) angeordnet sind, mitels eines Paares von Ringen (35) aus elastomerem Material und einem Paar von Anschlägen (36) ebenfalls aus elastomerem Material gehalten sind, wobei die Anschläge (36) mit Einschnitten versehen sind, in denen die Endbereiche (22a) der Messer (22) gehalten sind.

6. Schneidvorrichtung nach einem der vorangehenden Ansprüche, dadurch gekennzeichnet, daß der Ring (39) abgeschrägte Kanten aufweist, die mit konischen Lagerflächen (41) zusammenwirken, die an der Innenseite der Flansche (24a, 24b) angeordnet sind.

7. Schneidvorrichtung nach einem der vorangehenden Ansprüche, dadurch gekennzeichnet, daß im Betrieb die obere Fläche der Rippen (40) eine zylindrische Drehfläche (51) beschreibt, deren Radius sich von dem des Kreises unterscheidet, der durch die Schneidspitze der Messer (22) verläuft.

8. Schneidvorrichtung nach Anspruch 7, dadurch gekennzeichnet, daß der Abstand zwischen den beiden Radien einige Zehntel Millimeter beträgt.

9. Schneidvorrichtung nach einem der vorangehenden Ansprüche, dadurch gekennzeichnet, daß die Schneidmesser (22) in Radialebenen im Außenbereich der Trommel (19) angeordnet sind.

10. Schneidvorrichtung nach einem der Ansprüche 1 bis 8, dadurch gekennzeichnet, daß die Messer (22) bezüglich der Rotationsachse der Messerhalter-Trommel (19) entsprechend einem Winkel zwischen 10° und 30° geneigt sind.

11. Schneidvorrichtung nach einem der Ansprüche 2 bis 10, dadurch gekennzeichnet, daß die Fläche der Drucktrommel (18) mit einem elastomeren Überzug (50) versehen ist, dessen Material identisch dem elastomeren Material des Rippenkranzes ist.

12. Schneidvorrichtung nach einem der vorangehenden Ansprüche, dadurch gekennzeichnet, daß für einen Kranz mit vorgegebenen Rippen die Länge von geschnittenen Einzelfäden (19a) derart modifiziert ist, daß wenigstens ein Messer ohne Schneide zwischen zwei aufeinanderfolgenden Messern (22) vorgesehen ist, dessen Höhe so groß ist, daß es die Oberfläche der Drucktrommel (18) im Schneidbereich nicht berührt.

**Claims**

1. Cutting apparatus for cutting continuous threads into sections of a predetermined length, comprising pressing means constituted by a rotatable drum (18) of which the surface is completely smooth, a second drum (19) turning about an axis parallel to the first mentioned drum and equipped with blades (22) arranged perpendicular to its periphery and, between the blades (22), means causing compression of the thread (14) against the surface of the pressing drum (18) and the ejection of the cut sections (14a) under the effect of centrifugal force, characterised in that the blades (22) are fixed by their only ends (22a) and in that their bases opposite to their cutting edges remain completely free of any contact, the means causing compression of the thread (14) being formed by fins (40) fixed to a deformable ring (39) located beneath the base of the blades (22), the axis of the ring coinciding with the rotational axis of the blade-carrying drum (19), and capable of radial displacement within a space (52) located between its base and the blade-carrying drum (19).

2. Apparatus according to claim 1, characterised in that the ring (39) and the fins (40) form a one-piece crown of fins.

3. Apparatus according to any one of the preceding claims, characterised in that the ring (39) and the fins (40) are of an elastomer having a Shore A hardness between 80 and 100.

4. Apparatus according to any one of the preceding claims, characterised in that the ends of the blades (22) penetrate into slits (23) formed in two side pieces (24a, 24b) supported by two rims (25a, 25b) mounted face to face and concentric with the rotational axis of the blade-carrying drum (19).

5. Apparatus according to claim 4, characterised in that the ends of the blades (22) are maintained at the bottoms of the slits (23) formed in the sides (24a, 24b) by a pair of rings (35) of an elastomeric material and a pair of cheeks (36), also of an elastomeric material, provided with grooves into which the heels (22a) of the blades (22) penetrate.

6. Apparatus according to any one of the preceding claims, characterised in that the ring (39) has chamfered edges which cooperate with conical bearings (41) located on the internal surface of the side pieces (24a, 24b).

7. Apparatus according to any one of the preceding claims, characterised in that in the course of operation the upper surfaces of the fins (40) describe a cylindrical surface of revolution (51) of which the radius is different from that of the circle passing through the tops of the cutting edges of the blades (22).

8. Apparatus according to claim 7, characterised in that the difference between the two radii is a few tenths of millimetres.

9. Apparatus according to any one of the preceding claims, characterised in that the cutting blades (22) are arranged in radial planes at the periphery of the drum (19).

10. Apparatus according to any one of claims 1 to 8, characterised in that the blades (22) are inclined relative to the rotational axis of the blade-carrying drum (19) at an angle between 10 and 30°.

11. Apparatus according to any one of claims 2 to 10, characterised in that the pressing surface of the drum (18) is covered with a layer of an elastomeric material (50) which is identical to the elastomer which forms the crown of fins.

12. Apparatus according to any one of the preceding claims, characterised in that for a given crown of fins, the length of the cut thread strands (14a) is modified by inserting between two successive blades (22) at least one blade having no cutting edge and of which the height is such that it does not contact the surface of the pressing drum (18) in the cutting zone.

0 040 145

Fig. 1A

Fig. 1B

9

# Fig.2

**Fig. 3**

*Fig. 4·A*

*Fig. 4·B*